# EUROPEAN PATENT APPLICATION

(11) **EP 4 389 695 A1**
(43) Date of publication of application: **26.06.2024**
(21) Application number: 22216618.3
(22) Date of filing: 23.12.2022
(51) Int. Cl.: C01B 3/04

(54) **PROCESS FOR PRODUCING SYNTHESIS GAS PRODUCT COMPRISING HYDROGEN**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: COSCIA, Antonio, 60439 Frankfurt am Main (DE); ULBER, Dieter, 60439 Frankfurt / Main (DE); BASIN, Marie, 78350 Les Loges en Josas (FR)
(74) Representative: Air Liquide

(57) **Abstract**

A process (100) for producing a synthesis gas product comprising hydrogen by an endothermic cracking reaction of an ammonia feedstock stream, said process comprising the following steps:
• Providing a fuel gas stream (104),
• Providing the ammonia feedstock stream (101),
• Providing a combustion air flow (105),
• Enriching the combustion air flow in oxygen for obtaining an oxygen enriched combustion air flow (106),
• Feeding the fuel gas stream and the oxygen enriched combustion air flow (107) to a firing chamber for combusting at least partially the fuel gas stream in a combustion reaction (108),
• Providing heat (109) from the combustion to the endothermic cracking reaction (103).

## Description

The field of the present invention is that of process for producing a synthesis gas product. The invention relates particularly to a process for producing a synthesis gas product comprising hydrogen by an endothermic cracking reaction of an ammonia feedstock stream. The invention also relates to a furnace for producing a synthesis gas product comprising hydrogen by an endothermic cracking reaction of an ammonia feedstock stream.

Cracking of ammonia to hydrogen and nitrogen can be done by utilization of a catalytic converter / reactor at elevated temperatures (400 - 800°C). Such a reactor typically would comprise a metallic shell, catalyst and an external heat source. To achieve a lowest possible CO2 footprint for the cracking process, external heat is provided by fueling of ammonia in a combustion.

The disadvantage of such a process is that ammonia fuel has poor combustion properties such as a low flame speed, a small explosion window, a high ignition temperature resulting in an unstable flame and unwanted emissions such as unconverted ammonia and NOx.

The invention proposes a process for producing a synthesis gas product comprising hydrogen from an ammonia feedstock in which combustion features are improved, leading to an improved ammonia fuel combustion and then a better ammonia feedstock conversion into a synthesis product comprising hydrogen. Thus, the carbon footprint and the combustion properties are improved.

In the present disclosure, the ammonia fuel stream is also referred as ammonia fuel.

For this purpose, the invention proposes a process for producing a synthesis gas product comprising hydrogen by an endothermic cracking reaction of an ammonia feedstock stream, said process comprising the following steps:
- Providing a fuel gas stream,
- Providing the ammonia feedstock stream,
- Providing a combustion air flow,
- Enriching the combustion air flow in oxygen for obtaining an oxygen enriched combustion flow,
- Feeding the fuel gas stream and the oxygen enriched combustion flow to a firing chamber for combusting at least partially the fuel gas stream in a combustion reaction,
- Providing heat from the combustion to the endothermic cracking reaction.

By enriching in oxygen the combustion air flow, the overall efficiency of the combustion is improved, because the flame temperature increases and consequently the radiating heat transfer rate. Less ammonia fuel stream is thus required, and the conversion rate of ammonia feedstock stream is increased. Furthermore, such a process allows to increase the flame reactiveness and thus improve the flame stabilization.

According of one aspect of the invention, the combustion air flow is enriched in oxygen by feeding an oxygen flow to the combustion air flow for enriching said combustion air flow in oxygen.

According to one aspect of the invention, the oxygen flow comprises from 90% to 93% of oxygen, in particular when it comes from a pressure swing adsorption (PSA) separation unit.

According to one aspect of the invention, the oxygen flow comprises at least 21%, preferably at least 30%, preferably at least 40%, preferably at least 50%, preferably at least 60%, preferably at least 70%, preferably at least 80%, preferably at least 90%, preferably at least 99% of oxygen, in particular when the oxygen flow comes from an air separation unit (ASU) configured to separate oxygen from air by distillation.

According to one aspect of the invention, the oxygen flow comprises at least 21%, preferably at least 30%, preferably at least 40%, preferably at least 50%, preferably at least 60%, preferably at least 70%, preferably at least 80%, preferably at least 90%, preferably at least 99% of oxygen, in particular when the oxygen comes from an electrolyzer.

In one aspect of the invention, the oxygen flow is fed to the combustion air flow upstream of feeding the fuel gas stream and the oxygen enriched combustion flow is fed to the firing chamber.

In one aspect of the invention, the oxygen flow rate of the oxygen flow to be fed to the combustion air flow is controlled in a flow rate controlling step.

In one aspect of the invention, in the flow rate controlling step, when the combustion air flow rate increases, the oxygen flow rate supplied to said combustion air flow increases.

According to one aspect of the invention, the combustion air flow is enriched in oxygen by selectively filtering the combustion air flow, thereby removing nitrogen from the combustion air flow to obtain an oxygen enriched combustion flow.

According to one aspect of the invention, the combustion air flow is enriched in oxygen by selectively filtering the combustion air flow by a membrane unit.

In one aspect of the invention, the membrane unit is retaining nitrogen for obtaining the oxygen enriched combustion flow, said membrane unit being made of a material having an oxygen permeance.

According to one aspect of the invention, the combustion air flow is split into a first split combustion air flow and a second split combustion air flow, the first split combustion air flow being fed to a membrane unit comprising at least one membrane bundle, preferably a plurality of membrane bundles installed in parallel, said membrane unit being arranged to selectively filter the first split combustion air flow, thereby removing nitrogen from the first split combustion air flow to obtain an oxygen enriched filtrate.

According to one aspect of the invention, the first split combustion air flow is selectively filtered by the membrane unit, the membrane unit retaining nitrogen for obtaining the oxygen enriched filtrate, said membrane unit being made of a material having an oxygen permeance.

According to one aspect of the invention, the membrane unit has an oxygen permeance comprised between 20 and 200 GPU.

According to one aspect of the invention, the membrane unit has a O2/N2 (oxygen/nitrogen) selectivity comprised between 2 and 10.

According to one aspect of the invention, the combustion air flow is sent to a blower to obtain a pressurized combustion air flow at a pressure comprised between 0.02 to 0.5 barg, upstream in the combustion air flow circulation direction, said combustion air being in particular split.

According to one aspect of the invention, the first split combustion air flow is sent to a compressor to obtain a compressed combustion air flow at a pressure comprised between 0.5 to 5 barg upstream in the combustion air flow circulation direction feeding said first combustion air flow to the membrane unit.

According to one aspect of the invention, the second split combustion air flow is mixed with the oxygen enriched filtrate, downstream the feeding of the first split combustion air to the membrane unit in the first split combustion air flow circulation direction. Thus, the mixture of the second split combustion air flow and the oxygen enriched filtrate gives the oxygen enriched combustion flow.

According to one aspect of the invention, a membrane retentate is retained by the membrane bundle, said membrane retentate stream being vented.

According to one aspect of the invention, the process comprises a flow controlling step of the second split combustion flow rate with a flow control device such as a valve.

According to one aspect of the invention, the controlling step is performed depending on the number and type of membrane bundle of the membrane unit by putting in operation one or several bundles or removing from operation one or several bundles.

According to one aspect of the invention, the controlling step is performed automatically depending on the oxygen rate of the second split combustion air and the oxygen enriched combustion flow, the oxygen rate being measured with an oxygen rate control device.

According to one aspect of the invention, the oxygen enriched combustion air flow comprises an oxygen fraction, said oxygen fraction being comprised between 21% and 25%, preferably between 21% and 23%, preferably around 22,5%.

According to one aspect of the invention, the process comprises a step of conditioning the fuel gas stream, such as vaporizing the fuel gas stream, said step of conditioning the fuel gas stream following the step of providing the fuel gas stream.

In one aspect of the invention, the combustion is performed in absence of any catalyst to promote oxidation of ammonia. A non-catalytic combustion of ammonia converts the ammonia into nitrogen (N2) and water (H2O), with only a minor amounts of nitrogen oxides.

In one aspect of the invention, the fuel gas stream comprises ammonia.

In one aspect of the invention the combustion reaction is a first combustion in which the fuel gas stream is partially burned, generating heat and a combustion flue gas stream comprising an unburned portion of the fuel gas stream not being burned by the combustion reaction,

In one aspect of the invention, the process comprises :
- A first step of providing heat from the first combustion to the endothermic cracking reaction,
- A second combustion step in which the unburned portion of the fuel gas stream is burned
- A second step of providing heat from the second combustion to the endothermic cracking reaction.

In one aspect of the invention, the oxygen enriched combustion flow and the fuel gas stream are fed to the firing chamber for combusting the fuel gas stream in the first combustion. In particular, the oxygen enriched combustion flow is also fed to the unburned portion of fuel gas stream in the firing chamber for combusting the unburned portion of fuel gas stream in the second combustion.

According to one aspect of the invention, the oxygen enriched combustion flow and the fuel gas stream are fed to the firing chamber in a same burner assembly.

According to one aspect of the invention, the process comprises a step of controlling the oxygen enriched combustion flow so as to reach a near stochiometric value for the first combustion. In other words, the first combustion is performed with a lambda of near 1.

According to one aspect of the invention, the process comprises a conditioning step of the ammonia feedstock stream, said conditioning step following the ammonia feedstock stream providing step.

According to one aspect of the invention, the catalytic conversion converts the ammonia feedstock stream conditioned in the conditioning step into a synthesis gas product comprising hydrogen.

According to one aspect of the invention, the synthesis gas product comprises hydrogen, nitrogen and an unconverted portion of ammonia. In other words, the synthesis gas product comprises hydrogen, nitrogen and an unconverted portion of the ammonia feedstock stream not being converted by the catalytic conversion of ammonia feedstock.

According to one aspect of the invention, the process comprises a step of releasing the synthesis gas product from the reactor.

According to one aspect of the invention, the process comprises a step of processing the synthesis gas product following the releasing step. The processing step can be for example a purification step.

According to one aspect of the invention, the step of processing is a purification step following the releasing step, said purification step using a method such as Pressure Swing Adsorption (acronym PSA), cryogenic separation, membranes, Temperature Swing Adsorption (acronym TSA).

According to one aspect of the invention, the ammonia conditioning step is subjected to vaporization, preheating and/or superheating.

According to one aspect of the invention, the heat for vaporization, preheating and/or superheating during the ammonia conditioning step is provided by an external heat source, such as an external firing due to a combustion reaction near the conditioning step.

According to one aspect of the invention, the catalytic conversion is performed in presence of a catalyst that promotes the catalytic conversion.

According to one aspect of the invention, the catalytic conversion is at least partially heated by combustion of the fuel gas with the enriched combustion flow, said combustion reaction occurring near the catalytic conversion of ammonia.

The invention also relates to a furnace for producing a synthesis gas product comprising hydrogen by an endothermic cracking reaction of an ammonia feedstock, the furnace comprising:
- At least one reactor configured to produce the synthesis gas product comprising hydrogen by an endothermic cracking reaction of the ammonia feedstock,
- A firing chamber comprising a least one burner configured to perform a fuel gas stream combustion and arranged to heat the at least one reactor,
said furnace comprising a combustion air flow duct configured to feed a combustion air to the firing chamber and an oxygen enrichment system arranged to enrich the combustion air flow in oxygen and thus obtain an oxygen enriched combustion flow.

According to one aspect of the invention, the oxygen enrichment system comprises an oxygen flow duct fluidically connected to the combustion air flow duct, said oxygen flow duct being configured to feed an oxygen flow for enriching said combustion air in oxygen and obtain an oxygen enriched combustion flow.

According to one aspect of the invention, the oxygen flow duct is connected to the combustion air flow duct upstream of the firing chamber in the combustion air flow circulation direction.

According to one aspect of the invention, the oxygen flow duct comprises an oxygen flow control device arranged to control the flow rate of the oxygen flow to be supplied to the combustion air flow duct.

According to one aspect of the invention, the oxygen flow control device comprises a flow rate control valve, like a proportional valve or an equal percentage valve.

According to one aspect of the invention, the oxygen enrichment system comprises a membrane unit arranged to selectively filter oxygen from the combustion air flow and obtain an oxygen enriched combustion flow.

According to one aspect of the invention, the furnace comprises a blower arranged to blow the combustion air flow in the combustion air duct and to pressurize the combustion air flow.

According to one aspect of the invention, the blower is arranged in the combustion air flow duct.

According to one aspect of the invention, the furnace comprises a split control device arranged to split the combustion air stream into a first and a second split combustion air flow.

According to one aspect of the invention, the split control device is arranged in the combustion air flow duct.

According to one aspect of the invention, the furnace is arranged to make the first split combustion air flow circulate through a first combustion air distribution channel, and the second split combustion air flow circulate through a second combustion air distribution channel, said first and second distribution channel being fluidically connected by the split control device.

According to one aspect of the invention, first and second distribution channel being fluidically connected downstream the membrane unit.

According to one aspect of the invention, the membrane unit is arranged into the first combustion air distribution channel.

According to one aspect of the invention, the first combustion air distribution channel and the second combustion air distribution channel are fluidically connected downstream the membrane unit at a connecting zone arranged to mix the oxygen enriched filtrate and the second split combustion air flow.

According to one aspect of the invention, the membrane unit is arranged to be fed by the first split combustion air flow and to filter and thus obtain an oxygen enriched combustion flow.

According to one aspect of the invention, the furnace comprises a compressor arranged to pressurize the first split combustion air flow upstream the membrane unit in the combustion air flow direction.

According to one aspect of the invention, the furnace comprises a flow control device arranged in the second distribution channel, said control device being arranged to control the second split combustion air flow rate depending on the oxygen rate of the second split combustion air and of the oxygen enriched combustion flow.

According to one aspect of the invention, the furnace comprises an oxygen rate sensor arranged to measure the oxygen rate of the oxygen enriched combustion flow.

According to one aspect of the invention, the furnace comprises a flue gas exhaust duct, for example a flue gas exhaust tunnel, arranged to discharge a flue gas stream from the combustion outside the furnace. The flue gas stream is for example generated by the combustion of the ammonia fuel gas stream. Potentially, the flue gas stream comprises the unburned portion of ammonia fuel gas stream following the first combustion and the combustion products, in other words nitrogen and water, of the first combustion.

According to one aspect of the invention, the furnace comprises a plurality of reactors.

According to one aspect of the invention, the reactors are fluidically arranged parallel to each other.

According to one aspect of the invention, the reactors are disposed in the firing chamber.

According to one aspect of the invention, the firing chamber comprises at least one combustion zone in which the combustion is performed. In particular, the firing chamber comprises at least one combustion chamber, the combustion chamber comprising said at least one combustion zone.

Further features, details and advantages of the invention will become more clearly apparent from reading the description given below by way of indication with reference to the drawings, in which:
[FIG. 1] is a schematic representation of the process of the present invention,
[FIG. 2] is a schematic representation of the enriching step of the combustion air flow according to a first embodiment,
[FIG. 3] is a schematic representation of an of the enriching step of the combustion air flow according to a second embodiment
[FIG. 4] is a schematic representation of a furnace of the invention according to a first embodiment,
[FIG. 5] is a schematic representation of a furnace of the invention according to a second embodiment,
[FIG. 6] is a schematic view of a reactor of the furnace of the invention.

It should first of all be noted that the figures disclose the invention in a detailed manner so as to implement the invention, and said figures may of course serve to define the invention more clearly, where necessary.

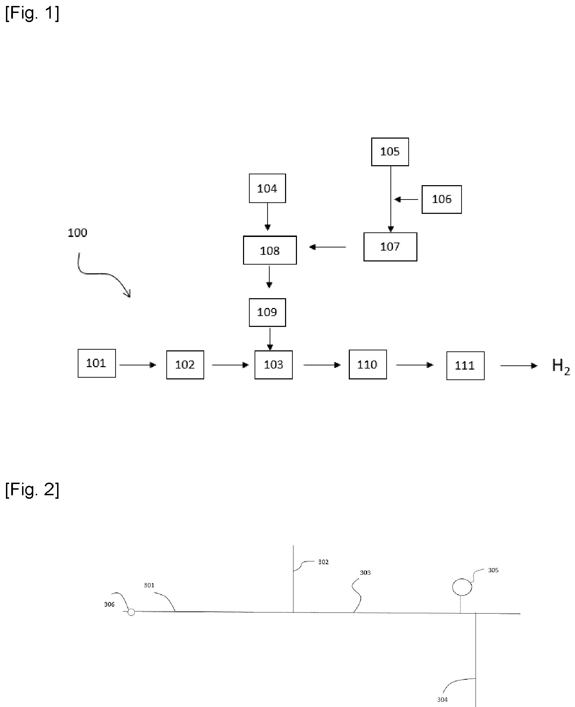

Figure 1 shows a process 100 for producing a synthesis gas product comprising hydrogen by an endothermic cracking reaction of an ammonia feedstock stream comprising the following steps:
- Providing an ammonia fuel stream 104,
- Providing an ammonia feedstock stream 101,
- Providing a combustion air flow 105,
- Enriching the combustion air flow in oxygen for obtaining an oxygen enriched combustion flow 107,
- Feeding the fuel gas stream and the oxygen enriched combustion flow 107 to a firing chamber for combusting at least partially the fuel gas stream in a combustion reaction 108,
- Providing heat 109 from the combustion 108 to the endothermic cracking reaction 103.

The process also comprises the following steps:
- Conditioning said ammonia feedstock stream 102,
- Releasing the synthesis gas product 110,
- Processing the synthesis gas product 111.

The steps 101-109 are performed in a furnace for producing a synthesis gas product comprising hydrogen by an endothermic cracking reaction of the ammonia feedstock stream.

Here, the conditioning step 102 is for example, but not limited to, the vaporization of the ammonia feedstock stream.

This cracking reaction of the ammonia feedstock stream is an endothermic reaction that requires heat. The endothermic cracking reaction is performed in presence of an active catalyst which promotes the cracking reaction of the ammonia feedstock when heat is provided to said endothermic cracking reaction.

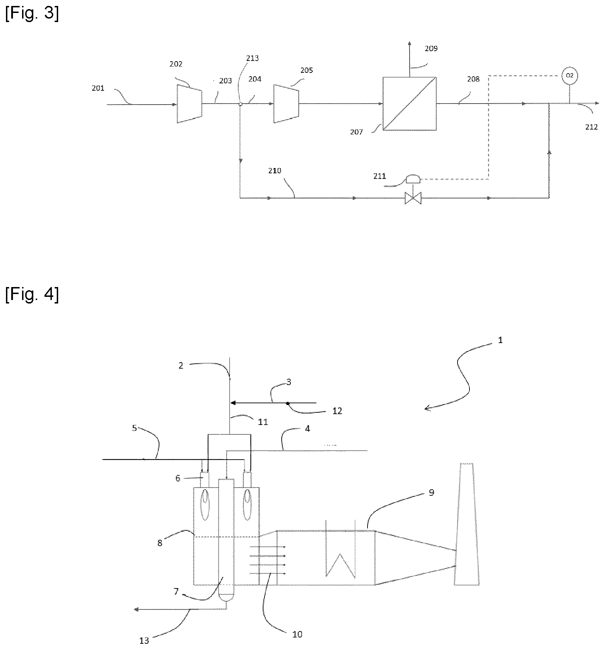

The step of enriching the combustion air flow in oxygen for obtaining an oxygen enriched combustion flow may be done in different manner, for example as explained in figures 2 and 3.

The step 106 of enriching the combustion air flow in oxygen to obtain the oxygen enriched combustion flow is performed upstream the step 107 of feeding the fuel gas in the combustion air flow direction, here an ammonia fuel gas. The oxygen fraction of the oxygen enriched combustion flow is around 22,5%.

Following the endothermic cracking reaction, the synthesis gas product comprises hydrogen, nitrogen and a portion of unconverted ammonia feedstock.

The process comprises a releasing step 110 of the synthesis gas product. During this step, the synthesis gas product is released from the reactor in which the endothermic cracking reaction occurs to be treated in a processing step 111 if needed. For example, this processing step can be a purification step. This purification step uses classical purification methods, such as such as PSA, cryogenic separation, membranes, TSA. Purified hydrogen is thus obtained.

As shown in figure 2, in a first embodiment, the combustion air flow is enriched by feeding an oxygen flow to the combustion air flow for enriching said combustion air flow in oxygen.

In this embodiment, the combustion air flow 301 is enriched by feeding an oxygen flow 302 to the combustion air flow 301 for enriching said combustion air flow in oxygen. Thus, an oxygen enriched combustion flow 303 is obtained. The oxygen flow is fed to the combustion air flow upstream of feeding the fuel gas stream 304 and the oxygen enriched combustion flows to the firing chamber.

In one aspect of the invention, the oxygen flow rate to be fed to the combustion air flow is controlled in a controlling step with a flow control device 306. In the controlling step, when the combustion air flow rate increases, the oxygen flow rate supplied to said combustion air flow increases. The oxygen flow rate is measured with an oxygen flow rate control device 305.

As shown in figure 3, in a second embodiment, the combustion air flow is enriched in oxygen by selectively filtering the oxygen of the combustion air flow to obtain an oxygen enriched combustion flow.

In this embodiment, the combustion air flow 201 is sent to a blower 202 to obtain a pressured combustion air flow 203 at a pressure comprised between 0.02 to 0.5 barg.

The pressured combustion air flow 203 is then split into a first split combustion air flow 204 and a second split combustion air flow 210, the first split combustion air flow 204 being fed to a membrane unit 207 comprising at least one membrane bundle, preferably a plurality of membrane bundles installed in parallel, said membrane bundle being arranged to selectively filter the first split combustion air flow 204, thereby removing nitrogen from the first split combustion air flow to obtain an oxygen enriched filtrate, following it passage through a compressor 205.

The first split combustion air flow is selectively filtered by the membrane unit 207 for obtaining the oxygen enriched filtrate 208, the membrane unit retaining nitrogen for obtaining the oxygen enriched filtrate 208, said membrane unit 207 retaining nitrogen being made of a material having an oxygen permeance comprised between 20 and 200 GPU. The membrane unit has for example a O2/N2 selectivity comprised between 2 and 10. Then, the membrane retentate stream 209 is vented.

The second split combustion air flow 210 is mixed with the oxygen enriched filtrate 208 downstream the feeding of the first split combustion air to the membrane unit 207 in the first and second split combustion air flows circulation direction. Thus, the mixture of the second split combustion air flow and the oxygen enriched filtrate gives the enriched combustion flow 212.

The process comprises a controlling step of the second split combustion air flow 210 rate with a flow control device 211 such as a valve. In a first embodiment, the controlling step is performed manually depending on the number and type of membrane bundle of the membrane unit by manually putting in operation one or several bundles or removing from operation one or several bundles. In another embodiment, the controlling step is performed automatically depending on the oxygen rate of the oxygen enriched combustion flow 212, the oxygen rate being measured with an oxygen rate sensor 213.

Figure 4 is a schematic representation of a furnace 1 for producing a synthesis gas product comprising hydrogen by an endothermic cracking reaction of an ammonia feedstock stream according to a first embodiment of the invention.

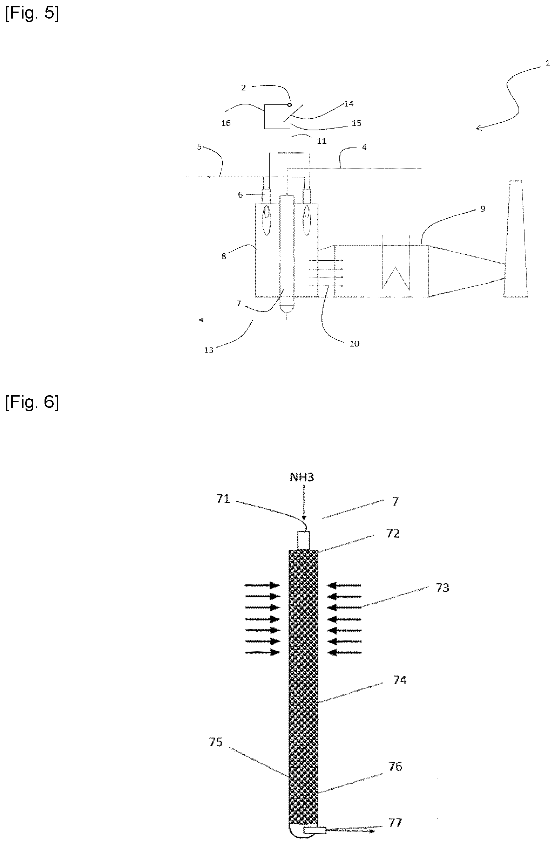

The furnace 1 comprises here one reactor 7 configured for producing a synthesis gas product comprising hydrogen by an endothermic cracking reaction of an ammonia feedstock stream. The reactor 7 is disclosed in the figure 6. In another embodiment not represented here, the furnace could comprise a plurality of reactors 7 arranged in parallel to each other.

The reactor 7 is fed with an ammonia feedstock stream by an ammonia feedstock stream duct 4. The ammonia feedstock stream comes from an ammonia feedstock source which is outside the furnace 1.

The reactor 7 is disposed in a firing chamber 8. The firing chamber comprises a burner 6 configured to generate a flame. The firing chamber is fed with an ammonia fuel stream thanks to an ammonia fuel stream duct 5. The ammonia feedstock stream comes from an external ammonia feedstock stream source. The synthesis gas product from the endothermic cracking reaction of the ammonia feedstock stream comprising hydrogen is collected by a collector duct 13.

The furnace 1 comprises oxygen flow duct 3 connected to a combustion air flow duct 2, said oxygen flow duct 3 being configured to feed an oxygen flow for enriching said combustion air in oxygen. The combustion air flow duct 2 is configured to supply an oxygen enriched combustion flow 11 to the firing chambers 8.

A flow control device 12 is for example a valve arranged to control the oxygen flow rate to be supply to the combustion air duct 2.

A flue gas stream 10 resulting from this first combustion is exhausted from the furnace by an exhaust tunnel 9.

Figure 5 is a schematic representation of a furnace 1 for producing a synthesis gas product comprising hydrogen by an endothermic cracking reaction of an ammonia feedstock stream according to a second embodiment of the invention.

In this embodiment, the oxygen enriching device comprises a membrane unit 14 arranged to filter selectively the oxygen from the combustion air flow. In other words, the combustion air flow is provided from a combustion air flow 2. The combustion air flow is split into a first and a second split combustion air flow. The first split combustion air flow circulates in a first combustion air distribution channel 15 and the second split combustion air flow circulates into a second combustion air distribution channel 16. The first split combustion air flow is fed to the membrane unit 15 for obtaining an oxygen enriched combustion flow. The second split combustion air flow and the oxygen enriched filtrate are then mixed together to obtain the oxygen enriched combustion flow, and the oxygen enriched combustion flow is fed to an ammonia fuel stream 5. A flow control device is arranged to control the second split combustion air flow rate depending on the number of membrane bundles comprised in the membrane unit, or depending on the oxygen rate of the oxygen enriched combustion flow obtained when the second split combustion air flow and the oxygen enriched filtrate are mixed together.

The other features of figure 4 apply here.

The reactor 7 is shown in the figure 6 comprise an outer shell tube, said outer shell tube being pressurized. The outer shell tube comprises a reaction chamber 75 in which a endothermic cracking conversion, here the cracking reaction, of the ammonia feedstock stream is realized. The reactor 7 comprises an ammonia feedstock stream inlet 71, the inlet 71 being configured to let the fluid in the shell tube 72, and more precisely in the reaction chamber 75.

The reaction chamber 75 comprises a layer of an active solid catalyst media 76, said catalyst 76 being configured to be active for the cracking reaction of the ammonia feedstock stream into a synthesis gas product comprising hydrogen. The catalyst is for example a dumped bed catalyst or a structured catalyst. In a preferred embodiment, the catalyst comprises nickel. The ammonia feedstock stream circulates in the active catalyst 76 bed where the cracking reaction occurs. This reaction is possible only at a high temperature, so heat 73 is provided to the reaction chamber 75.

The catalyst media 76 is configured to be heated by the heat from an external heat source, here the first and the second combustions described above.

The reactor comprises an outlet 77 for the synthesis gas product comprising hydrogen.

## Claims

1. A process (100) for producing a synthesis gas product comprising hydrogen by an endothermic cracking reaction of an ammonia feedstock stream, said process comprising the following steps:
• Providing a fuel gas stream (104),
• Providing the ammonia feedstock stream (101),
• Providing a combustion air flow (105),
• Enriching the combustion air flow in oxygen for obtaining an oxygen enriched combustion flow (106),
• Feeding the fuel gas stream and the oxygen enriched combustion flow (107) to a firing chamber for combusting at least partially the fuel gas stream in a combustion reaction (108),
• Providing heat (109) from the combustion to the endothermic cracking reaction (103).

2. A process (100) according to claim 1, wherein the combustion air flow is enriched in oxygen (106) by feeding an oxygen flow (302) to the combustion air flow (301) for enriching said combustion air flow in oxygen and obtaining the oxygen enriched combustion flow (303).

3. A process (100) according to claim 2, wherein the oxygen flow (302) is fed to the combustion air flow (301) upstream of feeding the fuel gas stream (304) and the oxygen enriched combustion flow (303) to the firing chamber.

4. A process (100) according to any of claims 2 or 3, wherein the oxygen flow rate of the oxygen flow (302) to be fed to the combustion air flow (301) is controlled in a flow rate controlling step.

5. A process (100) according to claim 1, wherein the combustion air flow (201) is enriched in oxygen by selectively filtering the combustion air flow (201) with a membrane unit (207), thereby removing nitrogen from the combustion air flow to obtain the oxygen enriched combustion flow (201).

6. A process (100) according to claim 5, wherein the membrane unit (207) is retaining nitrogen for obtaining the oxygen enriched combustion flow (212), said membrane unit being made of a material having an oxygen permeance.

7. A process (100) according to any of claims 5 or 6, wherein the combustion air flow (201) is split into a first split combustion air flow (204) and a second split combustion air flow (210), the first split combustion air flow (204) being fed to the membrane unit (207) comprising at least one membrane bundle, preferably a plurality of membrane bundles installed in parallel, said membrane unit (207) being arranged to selectively filter the first split combustion air flow (204), thereby removing nitrogen from the first split combustion air flow to obtain an oxygen enriched filtrate (208).

8. A process (100) according to claim 7, wherein the second split combustion air flow (210) is mixed with the oxygen enriched filtrate (208), downstream the feeding of the first split combustion air to the membrane unit (207) in the first split combustion air flow circulation direction.

9. A process (100) according to any of claims 7 to 8, wherein the process comprises a flow controlling step of the second split combustion air flow rate with a flow control device (211), such as a valve.

10. A process (100) according to any of claims 1 to 9, wherein the oxygen enriched combustion flow (212, 303) comprises an oxygen fraction, said oxygen fraction being comprised between 21% and 25%, preferably between 21% and 23%, preferably around 22,5%.

11. A process (100) according to any of claims 1 to 10, wherein the oxygen enriched combustion flow (212, 303) and the fuel gas stream, are fed to the firing chamber in a same burner assembly.

12. A furnace (1) for producing a synthesis gas product comprising hydrogen by an endothermic cracking reaction of an ammonia feedstock, the furnace comprising:
- At least one reactor (7) configured to produce the synthesis gas product comprising hydrogen by an endothermic cracking reaction of the ammonia feedstock,
- A firing chamber (8) comprising a least one burner (6) configured to perform a fuel gas stream combustion and arranged to heat the at least one reactor (7),
said furnace comprising a combustion air flow duct (2) configured to feed a combustion air to the firing chamber and an oxygen enrichment system (3, 14) arranged to enrich the combustion air flow in oxygen and thus obtain an oxygen enriched combustion flow.

13. A furnace (1) according to claim 12, wherein the oxygen enrichment system (3) comprises an oxygen flow duct (3) fluidically connected to the combustion air flow duct (2), said oxygen flow duct being configured to feed an oxygen flow for enriching said combustion air in oxygen and obtain an oxygen enriched combustion flow (11).

14. A furnace (1) according to claim 12, wherein the oxygen enrichment system (14) comprises a membrane unit (14) arranged to selectively filter oxygen from the combustion air flow and obtain an oxygen enriched combustion flow (11).
